# FASCICULE DE BREVET EUROPEEN

(11) **EP 2 438 142 B1**
(45) Date de publication et mention de la délivrance du brevet: **25.01.2017**
(21) Numéro de dépôt: 10734198.4
(22) Date de dépôt: 01.06.2010
(51) Int. Cl.: C10B 53/07, C10B 47/18, C09C 1/48, C10G 1/10, C08L 21/00, C08K 3/04

(54) **PROCÉDÉ DE TRANSFORMATION DE GRANULATS DE CAOUTCHOUC POUR PRODUIRE DU CARBONISAT SEMI-ACTIF ET DU PLASTIFIANT**
VERFAHREN ZUR KAUTSCHUKGRANULATUMWANDLUNG ZUR HERSTELLUNG EINES HALBAKTIVEN KARBONISIERTEN STOFFES UND WEICHMACHER
RUBBER GRANULATE CONVERSION PROCESS FOR PRODUCING A SEMI-ACTIVE CARBONIZED SUBSTANCE AND A PLASTICIZER

(30) Priorité: 02.06.2009 FR 0953628
(43) Date de publication de la demande: 11.04.2012
(73) Titulaire: Alfyma Industrie, 77700 Bailly-Romainvilliers (FR)
(72) Inventeur: BUDZYN, Stanislaw, PL-31-523 Cracovie (PL); IWANICKI, Victor, Varsovie (PL); SUMARA, Andrzej, PL-73-210 Recz (PL); ZMUDA, Wieslaw, PL-31-519 Cracovie (PL); D'EMAL, Christian, 77700 Magny le Hongre (FR)
(74) Mandataire: Lavoix
(86) Numéro de dépôt international: PCT/FR2010/051055
(87) Numéro de publication internationale: WO 2010/139888

(56) Documents cités:
- WO-A2-02/38658
- DE-A1- 3 523 645
- FR-A1- 2 402 475
- FR-A1- 2 721 692
- US-A- 5 229 099

## Description

L'invention concerne un procédé de transformation de granulats de caoutchouc notamment issus du broyage de pneus usagés permettant la production de carbonisat et éventuellement de plastifiant, qui peuvent être utilisés dans les mélanges qui servent à fabriquer des pièces en caoutchouc.

L'industrie du caoutchouc génère des quantités importantes de déchets de production et d'utilisation. La forme finale et les paramètres d'exploitation des produits sont obtenus pendant le processus irréversible de vulcanisation. Pour cette raison, le recyclage des objets en caoutchouc nécessite des opérations coûteuses, exigeant beaucoup de temps et de travail.

Généralement, les matériaux recyclés possèdent des propriétés physiques et mécaniques inférieures et ne sont pas compétitifs par rapport aux matières premières du caoutchouc d'origine. Pour cette raison, les déchets de caoutchouc constituent un problème sérieux tant sur le plan économique qu'écologique.

L'échelle de ce problème peut être estimée sur la base de la production de l'industrie de caoutchouc qui est d'environ 35 millions de tonnes par an. Il y a plus de 150 ans, des essais de recyclage des déchets de caoutchouc ont été menés. Aujourd'hui, après de nombreuses années, l'élaboration de technologies adéquates de son élimination reste un problème important dans l'industrie du caoutchouc. Du point de vue de la protection de l'environnement, le recyclage des pneus est un enjeu important car ils représentent 60-70 % de la production de l'industrie du caoutchouc.

Les pneus usagés peuvent être brûlés (par exemple dans des cimenteries, usines de pâtes et de papiers, chaudières industrielles). Ils peuvent également être broyés mécaniquement pour obtenir des résidus de caoutchouc, textile et ferraille. Parmi eux, les résidus de caoutchouc , selon leur taille granulométrique porteront les noms de poudrette ou granulats, la poudrette ayant un diamètre moyen inférieur à 2 mm, et le granulat ayant un diamètre moyen de 2 à 10 mm. Les granulats de caoutchouc peuvent notamment être utilisés dans les revêtements sportifs, les isolants phoniques, etc. La poudrette peut être utilisée en revêtements routiers, bétons isolants, etc. Le granulat de caoutchouc a l'avantage de présenter une teneur élevée en caoutchouc (selon les spécifications, par exemple de 98%). Il est très avantageux d'utiliser du granulat de caoutchouc, dans la mesure où son prix de vente est peu élevé et qu'il a par ailleurs très peu de débouchés sur le marché.

La pyrolyse des pneus est l'une des méthodes développées pour traiter les pneus usagés. Les produits de pyrolyse sont d'une part des gaz à haute température (supérieure à 600°C), qui sont généralement brûlés pour récupérer l'énergie disponible, et d'autre part un résidu solide à forte teneur en carbone, qui est soit mis en décharge soit utilisé comme charbon.

A ce sujet, le brevet US 5,229,099 (Roy) décrit un procédé de recyclage de caoutchouc de pneus par pyrolyse sous vide à une température comprise entre 490 et 510°C et une pression inférieure à 5 kPa. La demande WO 02/38658 (Weidleplan Industry Gmbh) décrit un procédé de traitement de déchets en caoutchouc par pyrolyse de granulats de caoutchouc à une température comprise entre 400 et 950 °C. La demande DE 3523645 (Brown Boveri) décrit un pyrolyseur comprenant une enceinte de pyrolyse, une entrée pour les pneus, un moyen d'entre d'eau en aval de l'entrée, un moyen de sortie des produits solides associé à un moyen de récupération des produits solides, et une sortie munie de moyens d'évacuation de la phase gazeuse. La demande FR 2 402 475 (Koppelman) décrit un procédé de traitement thermique, notamment de pyrolyse, de matériau carboné organique réalisé en présence d'eau, sous une pression comprise entre pression atmosphérique et 210 kg/cm² et à une température de quelques centaines de degrés à 1200°C. La demande FR 2 721 692 (Envirotec Group Limited) décrit un procédé de traitement de morceaux de pneus comprenant une étape dite de « pyrolyse » à 300-500°C, en présence d'un agent gazéifiant contenant de l'oxygène et éventuellement de l'eau.

Dans certains procédés récents, une partie des gaz de pyrolyse est condensée pour obtenir des huiles pyrolytiques qui peuvent servir de carburant ou être mélangées avec du gasoil. Toutefois, le résidu solide est souvent contaminé par des composés (textiles, ferrailles, sables, charges minérales du caoutchouc), ce qui réduit sa valeur et remet en cause la rentabilité du procédé.

La pyrolyse du caoutchouc est effectuée à des températures élevées, en général nettement supérieures à 500°C, comme dans US 4 588 477 ou BE 820012. La pyrolyse à pression réduite permet de réduire la température de pyrolyse, comme explicité par exemple dans US 2003/0079664 ou US 5 229 099. Toutefois, ces procédés de pyrolyse de caoutchouc ne permettent pas d'obtenir un résidu solide directement utilisable. En effet, le résidu solide obtenu présente les caractéristiques d'un charbon non actif, qui présente un pouvoir renforçant inexistant lorsqu'il est utilisé comme adjuvant dans les mélanges de caoutchouc.

Il existe des procédés de pyrolyse réalisés à partir de granulats de caoutchouc comme matière première. Ainsi, la demande internationale WO02/38658 décrit un procédé de transformation de granulats de pneus par pyrolyse dans une gamme de température de 400 à 950°C, de préférence de 500 à 750°C. Toutefois, même si le procédé décrit met en oeuvre des granulats de caoutchouc, WO'658 ne précise pas que la pyrolyse est effectuée en présence d'eau. Ainsi, le résidu solide obtenu dans WO02/38658 n'est pas décrit comme étant directement valorisable dans l'industrie caoutchoutière.

Les inventeurs ont découvert de façon surprenante que lorsque la pyrolyse de granulats de caoutchouc est effectuée dans des conditions spécifiques, notamment à faible température et en présence d'eau, tous les produits issus de la pyrolyse sont directement valorisables, notamment dans l'industrie caoutchoutière.

A la connaissance des inventeurs, seule la demande internationale WO 2003/91359 mentionne la valorisation du résidu solide issu de la pyrolyse. Ce résidu solide peut être utilisé comme constituant inactif des mélanges pour la fabrication des pièces en caoutchouc. Toutefois, le procédé de pyrolyse met en oeuvre des déchets de pneumatiques et aboutit dès lors à des produits peu intéressants en terme de valorisation, car le résidu solide obtenu n'a pas une pureté suffisante pour être utilisé sans purification préalable dans l'industrie caoutchoutière.

Un des objectifs de la présente invention est de fournir un procédé de transformation de granulats de caoutchouc.

Selon un premier aspect, l'invention concerne un procédé de transformation de granulats de caoutchouc en un carbonisat comprenant les étapes suivantes :
a) réaliser une pyrolyse de granulats de caoutchouc à une température comprise entre 400 et 500°C en introduisant de l'eau liquide au cours de la pyrolyse ce par quoi du carbonisat et une phase gazeuse sont obtenus,
b) récupérer le carbonisat obtenu lors de l'étape a).

Le procédé permet avantageusement de transformer des granulats de caoutchouc en produits directement valorisables. Par « valorisable », on entend qu'aucune purification (autre que celles indiquées dans la présente demande, à savoir la séparation de la phase gazeuse) des produits obtenus par le procédé selon l'invention n'est nécessaire pour pouvoir les utiliser.

Le terme « pyrolyse », est utilisé dans sa signification la plus classique, à savoir la décomposition chimique des granulats de caoutchouc par action de la chaleur dans une atmosphère déficiente en oxygène. En pratique, on minimise l'introduction d'oxygène, d'air, ou de tout gaz contenant de l'oxygène lors de la pyrolyse. La pyrolyse n'est toutefois pas forcément effectuée en atmosphère inerte (sous azote, argon par exemple). Il suffit simplement de limiter ou d'empêcher un apport d'air lors de la pyrolyse, pour limiter l'apport d'oxygène.

Par « granulats de caoutchouc », on désigne généralement des fragments de caoutchouc ayant une taille de 2 mm à 10 mm, notamment de 3 mm à 9 mm, de préférence de 4 mm à 8 mm et une pureté en caoutchouc généralement supérieure à 95%, de préférence supérieure à 98%. En particulier, le granulat de caoutchouc mis en oeuvre dans l'invention est exempt de particules de fer. En général, le granulat de caoutchouc provient du broyage de pneus, de bande transporteuse en caoutchouc ou de pièces en caoutchouc.

Le procédé selon l'invention est réalisé en introduisant de l'eau liquide au cours de la pyrolyse. Le procédé se distingue ainsi des procédés de l'état de la technique où le vecteur thermique lors de la pyrolyse est de la vapeur d'eau surchauffée. L'eau est introduite dans l'enceinte de pyrolyse sous forme liquide, à une température inférieure à 100°C. La température lors de la pyrolyse étant comprise entre 400 et 500°C, l'eau se transforme en vapeur d'eau lors de la pyrolyse, cette vapeur d'eau étant alors l'un des composants de la phase gazeuse. La transformation de l'eau liquide en vapeur d'eau consomme de l'énergie thermique. Dans le cadre de l'invention, l'eau n'est pas introduite pour fournir la chaleur nécessaire à la pyrolyse.

Les inventeurs ont découvert de manière surprenante que l'introduction d'eau liquide lors de la pyrolyse permet d'obtenir des produits de pyrolyse (carbonisat, huile lourde) de meilleure qualité et directement valorisables. En particulier, le procédé permet d'obtenir un carbonisat ayant les propriétés requises, notamment présentant un pouvoir renforçant qui permet son utilisation comme adjuvant dans les mélanges de caoutchouc, notamment pour la préparation de mélanges maîtres pour l'industrie caoutchoutière.

Sans vouloir être lié par une théorie particulière, l'introduction d'eau liquide au cours de la pyrolyse permet :
- de refroidir le carbonisat dans la partie inférieure de l'enceinte de pyrolyse, ce qui participe probablement à l'obtention d'un carbonisat de bonne qualité (« quenchage » de la réaction),
- de réaliser la pyrolyse à une température inférieure à 500°C, ce qui participe probablement également à l'obtention d'un carbonisat de bonne qualité et permet que le procédé consomme moins d'énergie (avantage économique),
- l'amélioration de l'évacuation des gaz et des vapeurs de pyrolyse hors du milieu réactionnel. Plus précisément, l'eau injectée, généralement dans la partie inférieure de l'enceinte de pyrolyse, se vaporise instantanément et se mélange avec les gaz de pyrolyse, ce qui empêche la formation d'amas de granulats de caoutchouc « collés » dans la partie supérieure de l'enceinte de pyrolyse par création de turbulences.

De préférence, dans le procédé ci-dessus, le pourcentage massique d'eau par rapport au poids de granulats de caoutchouc dans l'étape a) varie de 5% à 20%, notamment de 7 à 17%, de préférence de 10 % à 15%.

La pyrolyse de l'étape a) est réalisée à une température de 400 à 500°C, notamment de 425°C à 495°C, de manière encore plus préférée de 450°C à 480°C.

Le procédé de transformation de granulats de caoutchouc selon l'invention est de préférence réalisé de façon continue.

Le procédé de transformation de granulats de caoutchouc selon l'invention, et notamment l'étape a), est de préférence réalisé à pression atmosphérique, à savoir sans mettre en oeuvre de pression réduite ou de surpression.

Pour réaliser la pyrolyse de l'étape a), il n'est pas nécessaire d'ajouter des additifs tels qu'un catalyseur et/ou un solvant organique. Néanmoins, de tels modes ne sont pas exclus. En particulier, les granulats de caoutchouc peuvent comprendre des quantités mineures de matériaux sous forme de traces (par exemple de contaminants), qui incidemment sont reconnus dans la technique comme des catalyseurs. Selon un mode de réalisation préféré, les seuls constituants introduits dans le milieu sont les granulats de caoutchouc et l'eau. Ce mode de réalisation conduit à un carbonisat particulièrement adapté à un usage notamment à titre de charge renforçante dans les mélanges de caoutchouc.

Dans un mode de réalisation, le procédé de transformation de granulats de caoutchouc précité est conduit selon un mode cyclique dans lequel tout ou partie de l'eau présente dans la phase gazeuse obtenue dans l'étape a) est récupérée et où l'eau récupérée est réutilisée dans l'étape a).

Ce mode de réalisation présente l'avantage de permettre de recycler l'eau. En pratique, l'eau est introduite sous forme liquide au cours de la pyrolyse. L'eau se vaporise et est des constituants de la phase gazeuse issue de la pyrolyse. L'eau est alors séparée des autres constituants de la phase gazeuse pour pouvoir être recyclée et réinjectée dans l'enceinte de pyrolyse.

Un carbonisat susceptible d'être obtenu selon le procédé de transformation de granulats de caoutchouc décrit ci- dessus présente des caractéristiques particulières.

Ce carbonisat contient :
- du noir de carbone semi-actif,
- un ou plusieurs oxydes métalliques, comprenant du dioxyde de titane ou de l'oxyde de zinc, et
- du soufre.

Plus précisément, le carbonisat comprend, et généralement consiste en :
- du noir de carbone semi-actif formé lors de la pyrolyse,
- un ou plusieurs oxydes métalliques comprenant du dioxyde de titane ou de l'oxyde de zinc, qui sont utilisés comme catalyseurs de vulcanisation, et
- du soufre issu de la décomposition des ponts disulfure du caoutchouc.

Généralement, le carbonisat comprend :
- de 80 à 95%, typiquement environ 90%, de noir de carbone semi-actif,
- de 4 à 8%, typiquement environ 6%, de dioxyde de titane et/ou d'oxyde de zinc, et
- de 0,5 à 3%, typiquement de 1 à 2,8% de soufre,

Les pourcentages étant exprimés en pourcentages massiques par rapport au poids total du carbonisat.

Le carbonisat comporte généralement une teneur en cendres élevée, notamment de 8 à 16%, de préférence d'environ 12%. Par « cendres », on entend le résidu obtenu après incinération du carbonisat (ce qui conduit principalement à l'élimination du carbone et du soufre). Ces cendres sont typiquement constituées d'oxydes métalliques. Environ la moitié de ces cendres est constitué de dioxyde de titane et/ou d'oxyde de zinc.

Le noir de carbone est un matériau carboné amorphe, qui se présente sous forme de sphères et d'agrégats de ces sphères, les dimensions des sphères étant généralement de 10 à 250 nm.

Le noir de carbone présent au sein du carbonisat issu du procédé selon l'invention est un noir de carbone « semi-actif », au sens de la norme ASTM D1765-00, notamment compte tenu de sa surface spécifique. Par « carbonisat comprenant un noir de carbone semi-actif » ou « carbonisat semi-actif », on entend un carbonisat, qui, une fois introduit dans un mélange de caoutchouc avant vulcanisation, se comporte comme un noir de carbone semi-actif au sens de la norme ASTM D1765-00.

En général, le carbonisat a une surface spécifique comprise entre 25 et 40 m²/g.

Le carbonisat susceptible d'être obtenu selon le procédé selon l'invention est directement valorisable dans la filière, notamment à titre de charge renforçante pour la fabrication de mélanges de caoutchouc.

Le carbonisat comprend en outre du dioxyde de titane et/ou de l'oxyde de zinc. En effet, tout le dioxyde de titane et/ou l'oxyde de zinc qui se trouvait dans les granulats de caoutchouc de départ se retrouve dans le carbonisat issu de la réaction de pyrolyse. Le dioxyde de titane et/ou l'oxyde de zinc est (sont) le catalyseur de vulcanisation qui a été utilisé pour vulcaniser le caoutchouc constitutif des granulats. Comme l'oxyde ZnO et/ou TiO₂ sont des catalyseurs de vulcanisation communément utilisés lors de la préparation de mélanges de caoutchouc, lorsque le carbonisat est utilisé comme charge renforçante pour la fabrication de mélanges de caoutchouc, il n'est pas nécessaire d'ajouter de l'oxyde de zinc et/ou du dioxyde de titane supplémentaire, ce qui est un avantage non seulement en terme de simplicité d'utilisation, mais en plus dans la mesure où ces composés sont coûteux.

Le carbonisat comprend en outre du soufre. Or, le soufre est utile pour la vulcanisation des pièces en caoutchouc. En effet, le soufre permet de réaliser la réticulation entre les chaînes macromoléculaires d'élastomères.

Le carbonisat est donc particulièrement adapté pour une utilisation à titre de charge renforçante pour la fabrication de mélanges de caoutchouc.

On entend par « charge renforçante » une charge qui, additionnée à un mélange, permet, après vulcanisation de ce mélange, d'obtenir un vulcanisat présentant une meilleure résistance mécanique et en particulier, une meilleure résistance à la rupture et une meilleure résistance à l'abrasion.

Dans un mode de réalisation du premier aspect, le procédé de transformation de granulats de caoutchouc en carbonisat est conduit en valorisant en outre la phase gazeuse produite lors de la pyrolyse. Dans ce mode de réalisation, le procédé comprend en outre les étapes suivantes :
c) séparer par distillation les composés de la phase gazeuse obtenue lors de l'étape a) qui ont une température d'ébullition supérieure à 300°C ce par quoi une composition liquide, dite huile lourde, est obtenue,
d) récupérer l'huile lourde obtenue lors de l'étape c).

Dans un mode de réalisation spécifique, qui est le plus souvent mis en oeuvre (notamment pour des raisons pratiques), le procédé comprend les étapes de :
c) séparer par distillation les composés de la phase gazeuse obtenue lors de l'étape a) sous forme de trois fractions, à savoir
   - les composés qui ont une température d'ébullition supérieure à 300°C ce par quoi une première composition liquide, dite huile lourde, est obtenue,
   - les composés qui ont une température d'ébullition supérieure à la température ambiante et inférieure à 300°C, ce par quoi une deuxième composition liquide, dite huile légère, est obtenue,
   - les composés qui ont une température d'ébullition inférieure à la température ambiante, ce par quoi une composition gazeuse, dite gaz enrichi, est obtenue,
d) récupérer l'huile lourde obtenue lors de l'étape c),
e) éventuellement récupérer le gaz enrichi et l'huile légère obtenus lors de l'étape c).

Dans ces modes de réalisation sont avantageusement produits conjointement du carbonisat valorisable et de l'huile lourde valorisable.

Le « gaz enrichi » désigne un mélange dont les constituants ont une température d'ébullition inférieure à la température ambiante et qui est constitué principalement des composants suivants : méthane, butane, éthane, éthylène, propylène, hydrocarbures en C₄ (notamment C₄H8, C₄H₁₀), dihydrogène, azote, dioxygène, monoxyde et dioxyde de carbone et eau dont les proportions varient selon les paramètres opératoires.

L'« huile légère » désigne la composition liquide issue de la phase gazeuse, dont les composants ont une température d'ébullition inférieure à environ 300°C.

L' « huile lourde » désigne la composition liquide issue de la phase gazeuse, dont les composants ont une température d'ébullition supérieure à environ 300°C.

Par « température ambiante », on désigne une température généralement comprise entre 5 et 35°C, notamment de 15 à 25°C.

Le procédé selon l'invention a l'avantage de fournir des produits qui sont directement valorisables, en particulier pour l'industrie caoutchoutière.

Le gaz enrichi et l'huile légère peuvent être récupérés. Ils peuvent éventuellement être brûlés pour fournir de l'énergie thermique, par exemple pour chauffer l'enceinte de pyrolyse utilisée pour réaliser la pyrolyse.

L'huile lourde obtenue par le procédé selon l'invention de préférence un point éclair élevé, typiquement supérieur à 210°C, par exemple entre 210 et 300 °C (selon la norme ISO 2592), et une ou plusieurs des caractéristiques préférentielles indiquées dans le tableau ci-dessous.

**Tableau 1 : Propriétés typiques de l'huile lourde**

| Propriétés | Plages de valeurs |
|---|---|
| Densité à la température de 15 °C, kg/m³ | 700-1100, de préférence 800-1000 |
| Teneur en soufre, % | 0,7-1,5, de préférence 0,9-1,1 |
| Teneur en chlore, % | 0,005-0,1, de préférence 0,01 à 0,06 |
| Teneur en impuretés mécaniques, % | 0,1-0.2, de préférence 0,13-0,15 |
| Teneur en eau, % | 2-15, de préférence 5-11 |
| Teneur en émulsions, % | 1-3, de préférence 2,0 à 2,5 |
| Température d'inflammation, °C | 30-50, de préférence 34-40 |
| Viscosité cinématique à 40 °C, mm²/s | 7-13, de préférence 9-11 |
| Indice d'acide, mg KOH/g | 3-6, de préférence 4-5 |
| Résidus d'incinération, % | 0,01-0,05, de préférence 0,02-0,04 |
| Résidus de carbonisation, % | 1-3, de préférence 1,9-2,1 |

L'huile lourde obtenue par le procédé selon l'invention peut être utilisée à titre de plastifiant, notamment pour la fabrication de pièces en caoutchouc. A noter que l'huile lourde obtenue par le précédé correspond à un plastifiant à faible teneur en Hydrocarbure Aromatique Polycyclique (HAP), qui est particulièrement adapté aux évolutions récentes de la législation en la matière.

Les plastifiants sont utilisés pour faciliter la mise en oeuvre des mélanges d'élastomères durant leur fabrication en améliorant notamment la viscosité et les propriétés d'écoulement. Ils contribuent également aux propriétés mécaniques de l'élastomère après vulcanisation.

La description décrit une composition comprenant :
- le carbonisat tel que défini ci-dessus,
- au moins un élastomère,
- éventuellement de l'huile lourde telle que définie ci-dessus.

La description décrit une composition comprenant :
- le carbonisat tel que défini ci-dessus,
- au moins un élastomère.

La description décrit une composition comprenant :
- le carbonisat tel que défini ci-dessus,
- au moins un élastomère,
- de l'huile lourde telle que définie ci-dessus.

Ces compositions sont utiles pour la fabrication de mélanges maîtres pour l'industrie du caoutchouc.

Par « mélange maître », on désigne un mélange qui peut être utilisé en tant que tel ou comme constituant de la formulation finale pour la fabrication de pièces en caoutchouc par vulcanisation.

Par « élastomère », on désigne tous les types de caoutchouc synthétiques et le caoutchouc naturel. Les élastomères utilisés sont de préférence le caoutchouc naturel issu de l'HEVEA et/ou le copolymère SBR de Styrène et de Butadiène.

Comme indiqué ci-dessus, le carbonisat comporte du soufre qui est, généralement, en quantité suffisante pour réaliser la vulcanisation du caoutchouc. A noter toutefois que, lors de la pyrolyse, une partie du soufre contenue au départ dans les granulats de caoutchouc est éliminée dans la phase gazeuse sous forme de différentes molécules organiques volatiles et que seule une partie plus ou moins importante du soufre se trouve dans le carbonisat. Dans la plupart des cas, le carbonisat comporte assez de soufre pour réaliser la vulcanisation. Dans les cas plus rares où la teneur en soufre obtenue est insuffisante, elle peut être complétée au besoin en ajoutant du soufre, notamment de qualité trituré ventilé, juste avant la vulcanisation.

Dans les mélanges maîtres employant le carbonisat issu du procédé selon l'invention, il est avantageux selon une technique connue en soi d'ajouter de l'acide stéarique, qui sert d'activateur de vulcanisation. On peut aussi rajouter du soufre et/ou de l'oxyde de zinc ou du dioxyde de titane.

Dans un mode de réalisation préféré, la composition de type mélange maître comprend :
- 50 à 150 parties en poids de carbonisat,
- 80 à 120 parties en poids d'au moins un élastomère, et
- éventuellement 25 à 75 parties en poids d'huile lourde.

Dans un mode de réalisation particulièrement préféré, la composition de type mélange maître comprend :
- 50 à 150 parties en poids de carbonisat,
- environ 100 parties en poids d'au moins un élastomère.

Dans un autre mode de réalisation particulièrement préféré, la composition de type mélange maître comprend :
- 50 à 150 parties en poids de carbonisat,
- environ 100 parties en poids d'au moins un élastomère, et
- 25 à 75 parties en poids d'huile lourde.

L'élastomère peut par exemple être de type SBR série 1500 ou série 1700. La description décrit également l'utilisation du carbonisat précité, de l'huile lourde précitée ou de la composition précitée pour la préparation d'un mélange maître.

La description décrit une installation pour la transformation de granulats de caoutchouc en carbonisat, comprenant une enceinte de pyrolyse munie de moyens de chauffage externe permettant de chauffer ladite enceinte à une température de 400 à 500°C, et comprenant :
- une première entrée munie de moyens d'introduction de granulats de caoutchouc,
- une deuxième entrée munie de moyens d'introduction d'eau à l'état liquide située en aval de ladite première entrée,
- une première sortie munie de moyens d'évacuation des produits solides de la pyrolyse associés à des moyens de récupération des produits solides de la pyrolyse, et
- une deuxième sortie munie de moyens d'évacuation de la phase gazeuse produite lors de la pyrolyse.

Par « enceinte de pyrolyse », on désigne le milieu clos dans lequel la pyrolyse est effectuée. L'enceinte de pyrolyse est de préférence verticale, de manière à ce que la deuxième entrée munie de moyens d'introduction d'eau à l'état liquide soit située plus bas que la première entrée munie de moyens d'introduction de granulats de caoutchouc. Ainsi, le granulat de caoutchouc se transforme notamment en carbonisat lors de la pyrolyse, et le carbonisat descend le long du réacteur jusqu'au niveau de la deuxième entrée de l'enceinte de pyrolyse où de l'eau liquide arrive et « quenche » la réaction de pyrolyse.

L'enceinte de pyrolyse est munie de moyens de chauffage externe. La chaleur ne provient pas des produits introduits dans l'enceinte (granulats de caoutchouc et eau).

L'enceinte de pyrolyse est chauffée par chauffage externe, qui permet d'atteindre la température de pyrolyse. L'enceinte de pyrolyse comporte généralement un arbre central, qui est généralement également chauffé. De préférence, l'arbre central est muni de pâles d'agitation.

Dans un mode de réalisation particulier, le chauffage du système de chauffage externe provient au moins en partie de la combustion du gaz enrichi et/ou de l'huile légère obtenus par le procédé selon l'invention.

Avantageusement, les moyens d'introduction des granulats de caoutchouc dont est munie la première entrée de l'enceinte de pyrolyse comprennent des moyens d'introduction d'eau conjointe à l'introduction des granulats de caoutchouc (les granulats de caoutchouc introduits sont « mouillés »). Par « introduction conjointe », on entend les granulats de caoutchouc sont introduits avec de l'eau. Typiquement, les moyens d'introduction de granulats de caoutchouc comprennent une partie tubulaire contenant une vis inclinée sans fin qui permet d'amener le mélange eau/granulats vers la première entrée.

L'enceinte de pyrolyse comprend une deuxième entrée munie de moyens d'introduction d'eau à l'état liquide. Généralement, la majorité de l'eau est introduite par cette deuxième entrée.

L'eau est donc introduite par deux entrées dans l'enceinte de pyrolyse: d'une part par la première entrée et conjointement avec les granulats de caoutchouc, qui sont introduits dans l'enceinte de pyrolyse en étant mouillés, d'autre part par la deuxième entrée dédiée à l'eau.

L'enceinte de pyrolyse est exempte de moyens spécifiques d'entrée et/ou de sortie de vapeur d'eau surchauffée. En effet, l'eau est introduite dans l'enceinte de pyrolyse sous forme liquide. Lors de la pyrolyse, l'eau qui se transforme en vapeur d'eau sous effet de la chaleur est éliminée dans la phase gazeuse, et la vapeur d'eau est donc évacuée par les moyens d'évacuation de la phase gazeuse.

Dans un mode de réalisation, dans l'installation précitée, les moyens d'introduction de granulats de caoutchouc dont est munie la première entrée de l'enceinte de pyrolyse comprennent un dispositif de pré-mélange des granulats et d'eau permettant d'obtenir un pré-mélange d'eau et de granulats de caoutchouc sensiblement exempt d'air.

Dans un mode de réalisation particulier, dans l'installation précitée, les moyens d'introduction de granulats de caoutchouc dont est munie la première entrée de l'enceinte de pyrolyse comprennent un dispositif de pré-mélange des granulats et d'eau permettant d'obtenir un pré-mélange exempt d'air.

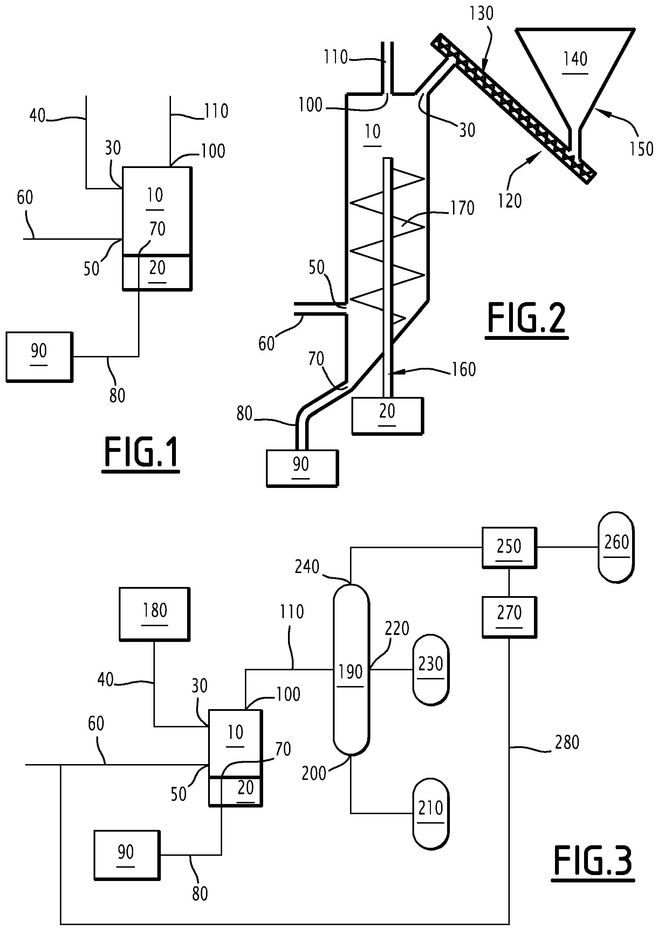

Le dispositif de pré-mélange peut notamment être un bac conique qui comporte des granulats de caoutchouc et de l'eau et dont l'extrémité inférieure est reliée à la vis inclinée sans fin qui alimente l'enceinte de pyrolyse en granulat et en eau, comme illustré sur la figure 2.

Ce dispositif permet avantageusement d'empêcher l'entrée d'air, et donc d'oxygène, dans l'enceinte de pyrolyse, ce qui permet d'effectuer la pyrolyse dans une atmosphère déficiente en oxygène.

Dans un autre mode de réalisation, l'installation précitée est adaptée pour la transformation de granulats de caoutchouc en carbonisat avec production conjointe d'huile lourde, et comprend en outre une colonne de distillation en communication fluide avec les moyens d'évacuation de la phase gazeuse, ladite colonne de distillation étant propre à séparer les composés de ladite phase gazeuse qui ont une température d'ébullition inférieure à 300°C et où ladite colonne de distillation comprend une sortie munie de moyens de récupération de ladite huile lourde.

Dans ce mode de réalisation, la phase gazeuse sortant de l'enceinte de pyrolyse est dirigée vers une colonne de distillation.

La colonne de distillation permet ainsi de séparer l'huile lourde des autres composants de la phase gazeuse.

Dans un mode de réalisation préféré, la colonne de distillation est propre à séparer :
- les composés de ladite phase gazeuse qui ont une température d'ébullition supérieure à 300°C ce par quoi une première composition liquide, dite huile lourde, est obtenue,
- les composés de ladite phase gazeuse qui ont une température d'ébullition supérieure à la température ambiante et inférieure à 300°C, ce par quoi une deuxième composition liquide, dite huile légère, est obtenue,
- les composés de ladite phase gazeuse qui ont une température d'ébullition inférieure à la température ambiante, ce par quoi une composition gazeuse, dite gaz enrichi, est obtenue, et
ladite colonne de distillation comprenant une première sortie munie de moyens de récupération de ladite huile lourde, une deuxième sortie munie de moyens de récupération de ladite huile légère, une troisième sortie munie de moyens de récupération dudit gaz enrichi.

Dans ce mode de réalisation, la colonne de distillation permet de séparer les constituants de la phase gazeuse et d'isoler trois phases : le gaz enrichi en tête de colonne, l'huile légère en milieu de colonne et l'huile lourde en bas de la colonne. Le gaz enrichi, l'huile légère et l'huile lourde peuvent être stockés avant utilisation dans des réservoirs de stockage.

Dans un mode de réalisation préféré, l'installation comporte un refroidisseur à eau en communication fluide avec le gaz enrichi, ledit refroidisseur à eau étant propre à séparer l'eau des autres constituants du gaz enrichi.

Dans un mode de réalisation particulièrement préféré, l'installation comporte en outre des moyens de récupération de l'eau sous forme liquide et des moyens de ré-injection de l'eau récupérée dans l'enceinte de pyrolyse.

Ce mode de réalisation permet avantageusement de recycler l'eau. L'eau est donc introduite dans l'enceinte de pyrolyse, dans laquelle elle est transformée en vapeur. Cette vapeur s'échappe du réacteur avec la phase gazeuse. Après séparation de la phase gazeuse dans la colonne de distillation, la vapeur d'eau est l'un des constituants du gaz enrichi. Le refroidisseur à eau permet de condenser l'eau et de séparer l'eau des autres constituants du gaz enrichi. L'eau est alors renvoyée vers l'enceinte de pyrolyse par le recycleur d'eau.

Par « colonne de distillation », on entend une unité de séparation qui permet de séparer les composants contenus dans la phase gazeuse par distillation.

L'installation utilisable pour le procédé selon l'invention présente l'avantage d'être auto-suffisante en énergie, c'est-à-dire qu'elle permet de produire au moins autant d'énergie que l'énergie qui est nécessaire pour l'alimenter (notamment pour chauffer l'enceinte de pyrolyse).

Différentes caractéristiques et modes de réalisation intéressants de l"installation sont illustrés ci-après en référence aux figures ci-annexées, où :
les figures 1 et 2 sont des représentations d'une installation utilisable pour le procédé selon l'invention,
la figure 3 est une vue en coupe du dispositif mis en oeuvre pour la réalisation des exemples ci-après.

Sur la figure 1 est représentée une installation comportant :
- une enceinte de pyrolyse 10, munie de moyens de chauffage externe 20, et qui comporte :
   - une première entrée 30 munie de moyens d'introduction de granulats de caoutchouc 40,
   - une deuxième entrée 50 munie de moyens d'introduction d'eau à l'état liquide 60 située en aval de ladite première entrée,
   - une première sortie 70 munie de moyens d'évacuation des produits solides de la pyrolyse 80 associés à des moyens de récupération des produits solides de la pyrolyse 90,
   - une deuxième sortie 100 munie de moyens d'évacuation de la phase gazeuse produite lors de la pyrolyse 110.

Les moyens de chauffage externe 20 permettent de chauffer l'enceinte 10 à une température de 400 à 500°C.

Les granulats mouillés sont introduits par la première entrée 30 de l'enceinte et l'eau est introduite par la deuxième entrée 50 de l'enceinte. La deuxième entrée 50 munie de moyens d'introduction d'eau est située en aval (plus bas que) la première entrée 30 munie de moyens d'introduction de granulats : Les granulats de caoutchouc subissent la réaction de pyrolyse et se transforment en carbonisat en se déplaçant vers le bas de l'enceinte. La réaction de pyrolyse est alors « quenchée » par l'arrivée d'eau liquide arrivant par la deuxième entrée.

La pyrolyse est réalisée dans l'enceinte de pyrolyse.

La phase gazeuse produite lors de la pyrolyse est évacuée de l'enceinte par la deuxième sortie 90, et les produits solides (carbonisat) sont évacués de l'enceinte par la première sortie 70, pour être finalement récupérés dans le moyen de récupération des produits solides de la pyrolyse 90, par exemple un réservoir de stockage de produits solides de la pyrolyse.

Sur la figure 2 est représentée une installation (en coupe) comprenant une enceinte de pyrolyse 10, munie de moyens de chauffage externe 20, qui comporte :
- une première entrée 30 munie de moyens d'introduction de granulats de caoutchouc 40 comprenant :
   - une partie tubulaire 120 contenant une vis inclinée sans fin 130, et
   - un dispositif de pré-mélange des granulats et d'eau 140, notamment un bac conique 150, et dont l'extrémité inférieure est reliée à la partie tubulaire 120,
- une deuxième entrée 50 munie de moyens d'introduction d'eau à l'état liquide 60 située en aval de ladite première entrée,
- une première sortie 70 munie de moyens d'évacuation des produits solides de la pyrolyse 80 associés à des moyens de récupération des produits solides de la pyrolyse 90,
- une deuxième sortie 100 munie de moyens d'évacuation de la phase gazeuse produite lors de la pyrolyse 110,
- un arbre central 160, muni de pâles d'agitation 170.

La partie tubulaire 120 contenant la vis inclinée sans fin 130 amène le mélange eau/granulats vers la première entrée 30.

Le dispositif de pré-mélange des granulats et d'eau 140 comporte des granulats de caoutchouc et de l'eau permet d'obtenir un pré-mélange d'eau et de granulats de caoutchouc sensiblement exempt d'air.

Sur la figure 3 est représentée une installation (en coupe) comprenant :
- un bac de stockage 180 relié à l'enceinte de pyrolyse 10,
- une enceinte de pyrolyse 10, munie de moyens de chauffage externe 20, et comprenant :
   - une première entrée 30 munie de moyens d'introduction de granulats de caoutchouc 40,
   - une deuxième entrée 50 munie de moyens d'introduction d'eau à l'état liquide 60 située en aval de ladite première entrée 30,
   - une première sortie 70 munie de moyens d'évacuation des produits solides de la pyrolyse 80 associés à des moyens de récupération des produits solides de la pyrolyse 90, et
   - une deuxième sortie 100 munie de moyens d'évacuation de la phase gazeuse produite lors de la pyrolyse 110,
- une colonne de distillation 190, en communication fluide avec les moyens d'évacuation de la phase gazeuse produite lors de la pyrolyse des granulats de caoutchouc 110 en deuxième sortie 100 de l'enceinte de pyrolyse, et
   ladite colonne de distillation 190 comprenant :
   - une première sortie 200 munie de moyens de récupération de ladite huile lourde 210, notamment un réservoir de stockage d'huile lourde,
   - une deuxième sortie 220 munie de moyens de récupération de ladite huile légère 230, notamment un réservoir de stockage des huiles légères,
   - une troisième sortie 240,
- des moyens de récupération de l'eau sous forme liquide, notamment :
   - un refroidisseur à eau 250 en communication fluide avec la tête de la colonne de distillation 190 par la troisième sortie 240, et muni de moyens de récupération du gaz enrichi 260, notamment un réservoir de stockage de gaz enrichi,
   - un recycleur d'eau 270, et
- des moyens de ré-injection de l'eau récupérée dans l'enceinte de pyrolyse 280.

Le bac de stockage 180 contient des granulats de caoutchouc et de l'eau.

Le refroidisseur à eau 250 refroidit le gaz enrichi provenant de la tête de la colonne de distillation 190.

La colonne de distillation 190 sépare les composés de la phase gazeuse issue de la pyrolyse en trois phases :
- les composés de ladite phase gazeuse qui ont une température d'ébullition supérieure à 300°C ce par quoi une première composition liquide, dite huile lourde, est obtenue, cette huile lourde étant évacuée de la colonne de distillation par la première sortie 200,
- les composés de ladite phase gazeuse qui ont une température d'ébullition supérieure à la température ambiante et inférieure à 300°C, ce par quoi une deuxième composition liquide, dite huile légère, est obtenue, cette huile légère étant évacuée de la colonne de distillation par la deuxième sortie 220,
- les composés de ladite phase gazeuse qui ont une température d'ébullition inférieure à la température ambiante, ce par quoi une composition gazeuse, dite gaz enrichi, est obtenue, ce gaz enrichi étant évacué de la colonne de distillation par la troisième sortie 240.

Le recycleur d'eau 270 recycle l'eau du gaz enrichi vers l'enceinte de pyrolyse 10.

### EXEMPLES

### EXEMPLE 1

2 kg/h de granulats de caoutchouc (granulats de 1,0 à 4,0 mm (% de textile: ≤ 1,5% - sable : 1% - métal ≤ 0,1 %) - ABC RECYCLING^{®}) et 0,25 litre d'eau/heure sont introduits dans une enceinte de pyrolyse chauffée à 495 °C. 0.8 kg de carbonisat sont récupérés par heure. La phase gazeuse formée lors de la pyrolyse est séparée en gaz enrichi (0,3 kg/h), en huile lourde (0,5 kg/h) et en huile légère (0,4 kg/h).

Le tableau 2 présente les caractéristiques du carbonisat semi-actif obtenu comparé aux caractéristiques de la suie N-330^{®} caractérisée selon une norme ASTM qui lui confèrent la qualité d'un noir de carbone semi-actif.

**Tableau 2. Comparaison de la suie N-330^{®} et du carbonisat obtenu**

| **ESSAIS DE LA SUIE** | **NORME** | **N-330^{®}** | **Carbonisat semi-actif** |
|---|---|---|---|
| Indice d'iode [g/kg] | ASTM D 1510 | 82,6 | 105,7 |
| Absorption (dibutyl phtalate DBP), [cm³/100g] | ASTM D 2414 | 101,7 | - |
| Adsorption (Bromure de cétyltriméthyl ammonium CTAB), [m²/g] | ASTM D 3765 | 81,7 | 84,7 |
| Force de colorisation, [%] | ASTM D 3265 | 102,1 | 59,2 |
| Perte de poids pendant séchage à 125 °C, [%] | ASTM D 1509 | 0,15 | 0,75 |
| Teneur en cendre, [%] | ASTM D 1506 | 0,31 | 12,0 |
| Teneur en soufre, [%] | ASTM D 1619 | 0,39 | 2,43 |

On constate que le carbonisat obtenu comporte des teneurs importantes en matière valorisable.

Le carbonisat obtenu par le procédé selon l'invention présente une grande teneur en cendres : 12 %, dont presque la moitié est constituée d'oxyde de zinc (ZnO) (tableau 3). Le carbonisat contient également une quantité significative de soufre.

**Tableau 3. Composition de la cendre obtenue par incinération du carbonisat obtenu par le procédé selon l'invention**

| **Composant** | **Teneur** [%] |
|---|---|
| Na₂O | 0,486602 |
| Li₂O | 0,001213 |
| K₂O | 0,175399 |
| **ZnO** | **49,61224** |
| Fe₂O₃ | 1,34167 |
| As₂O₃ | 0,00225 |
| CrO₃ | 0,032389 |
| CdO | 0,000218 |
| PbO | 0,022657 |
| CoO | 0,182031 |
| NiO | 0,009114 |
| CuO | 0,088711 |
| HgO | 6,55 E -05 |
| SiO₂ | 29,9 |
| CaO | 6,124958 |
| MgO | 4,129356 |
| Al₂O₃ | 2,886896 |

Le tableau 4 regroupe les caractéristiques techniques de deux batchs d'huile lourde obtenues par le procédé selon l'invention.

**Tableau 4 : Caractéristiques techniques de deux batchs d'huile lourde obtenues par le procédé selon l'invention**

| N° | Caractéristique | Essai 1 | Essai 2 |
|---|---|---|---|
| 1. | Densité à la température de 15 °C, kg/m³ | 917,2 | 920,5 |
| 2. | Teneur en soufre, % | 1,36 | 1,73 |
| 3. | Viscosité cinématique à 40 °C, mm²/s (mesurée par un viscosimètre à capillaire en verre) | 63,8 (80°C) | 29,6 (90°C) |
| 4. | Température de solidification, °C | 10 | 28 |

### EXEMPLE 2

Le carbonisat obtenu dans l'exemple 1 a été utilisé comme charge renforçante pour la fabrication de mélanges de caoutchouc. Plus précisément, dans le mélange, 50% de suie N-330^{®} classiquement utilisée par les caoutchoutiers comme charge renforçante ont été substitués par du carbonisat.

Le tableau 5 détaille, à titre de comparaison, la composition des mélanges 1 et 2, le mélange 1 (témoin) comprenant en outre comme charge renforçante 100% de suie N-330^{®} et le mélange 2 comprenant en outre comme charge renforçante un mélange 50% de suie N-330^{®} / 50% de carbonisat de l'exemple 1.

**Tableau 5. Composition des mélanges 1 et 2**

| **MATIÈRE PREMIÈRE** | Mélange 1 | Mélange 2 |
|---|---|---|
| Caoutchouc synthétique (KER^{®} N-29 de | 53,1 | 53,1 |
| Synthos Dwory^{®}) | | |
| Caoutchouc synthétique (KER^{®} 8512 Synthos Dwory^{®}) | 7,7 | 7,7 |
| Suie N-330^{®} (Bydaoskie Zak 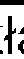 ady Przemys 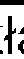 u Gumowego "STOMIL" S.A.) | **22,4** | **11,2** |
| Suie N-539^{®} (Bydgoskie Zakf 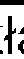 ady Przemyst 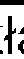 y Gumowego "STOMIL" S.A.) | 4,4 | 4,4 |
| Carbonisat obtenu dans l'exemple 1 | - | 11,2 |
| Oxyde de zinc (blanc de zinc) | 3,1 | 2,4 |
| acide stéarique | 0,8 | 0,8 |
| Accélérateur TMTD (disulfure de tétraméthyl thiurame) | 0,1 | 0,1 |
| Accélérateur CBS (n-cyclohéxyl-2-benzothiazole sulfonamide) | 1,3 | 1,3 |
| Soufre trituré | 0,7 | 0,7 |
| Colophane | 0,4 | 0,4 |
| Huile Nytex^{®} (plastifiant) | 6 | 6 |
| Kaolin | - | 0,7 |

Le tableau 6 regroupe les propriétés physiques et mécaniques des mélanges de caoutchouc obtenus après vulcanisation.

**Tableau 6. Résultats des essais physiques et mécaniques des mélanges 1 (témoin) et 2**

| Type d'essai | Mélange 1 (témoin) | Mélange 2 |
|---|---|---|
| Dureté (+- 5) [°Sh] (mesurée par un testeur de dureté dynamique shore A ASTM D 2240) | 70 | 67 |
| Poids spécifique [tonnes/m³] ou densité | 1,10 | 1,11 |
| Abrasivité [mm³] (selon norme DIN 53 516 et | 111 | 124 |
| NFT 46 012 sous charge de 1 daN) | | |
| Résistance au déchirement [kN/m] (éprouvettes angulaires entaillées (Norme NF T 46-007)) | 10,7 | 11,3 |
| Résistance à la tension [MPa] (Selon norme NF T46002 (module 300%)) | 19,4 | 20,5 |
| Allongement relatif (par rapport à la longueur initiale de l'éprouvette) ou déformation à la rupture [%] | 547 | 700 |

Le mélange de caoutchouc comprenant 50% de suie N-330^{®} et 50% de carbonisat comme charge renforçante a des propriétés similaires au mélange de caoutchouc obtenu à partir d'un mélange maître comprenant 100% de suie N-330^{®}. La substitution de la totalité ou d'une partie de la suie N-330^{®} par le carbonisat est très intéressante du point de vue économique, car la suie N-330^{®} est un produit coûteux.

## Revendications

1. Procédé de transformation de granulats de caoutchouc en un carbonisat comprenant les étapes suivantes :
a) réaliser une pyrolyse des granulats de caoutchouc à une température comprise entre 400 et 500 °C en introduisant de l'eau liquide au cours de la pyrolyse ce par quoi du carbonisat et une phase gazeuse sont obtenus,
b) récupérer le carbonisat obtenu lors de l'étape a).

2. Procédé selon la revendication 1, où l'étape a) est réalisée à pression atmosphérique.

3. Procédé selon la revendication 1 ou 2, comprenant en outre les étapes suivantes :
c) séparer par distillation les composés de la phase gazeuse obtenue lors de l'étape a) qui ont une température d'ébullition supérieure à 300°C ce par quoi une composition liquide, dite huile lourde, est obtenue,
d) récupérer l'huile lourde obtenue lors de l'étape c).

4. Procédé selon l'une quelconque des revendications 1 à 3, dans lequel le pourcentage massique d'eau par rapport au poids de granulats de caoutchouc dans l'étape a) varie de 5 à 20%.

5. Procédé de transformation de granulats de caoutchouc selon l'une quelconque des revendications 1 à 4, conduit selon un mode cyclique dans lequel tout ou partie de l'eau présente dans la phase gazeuse obtenue dans l'étape a) est récupérée et où l'eau récupérée est réutilisée dans l'étape a).

## Patentansprüche

1. Verfahren zur Umwandlung von Kautschuk-Granulaten in ein Carbonisat, folgende Schritte umfassend:
a) Durchführen einer Pyrolyse der Kautschuk-Granulate bei einer Temperatur zwischen 400 und 500°C, indem während der Pyrolyse flüssiges Wasser eingeführt wird, wodurch Carbonisat und eine Gasphase erhalten werden,
b) Sammeln des bei Schritt a) erhaltenen Carbonisats,

2. Verfahren nach Anspruch 1, wobei der Schritt a) bei Atmosphärendruck durchgeführt wird.

3. Verfahren nach Anspruch 1 oder Anspruch 2, außerdem die Schritte umfassend:
c) Trennen der Verbindungen der Gasphase, die bei Schritt a) erhalten wird, durch Destillation, wobei die Verbindungen eine Siedetemperatur größer als 300°C aufweisen, wodurch eine flüssige Zusammensetzung, genannt Schweröl erhalten wird,
d) Sammeln des bei Schritt c) erhaltenen Schweröls.

4. Verfahren nach einem beliebigen der Ansprüche 1 bis 3, bei dem der Massenprozentsatz an Wasser ein Bezug auf das Gewicht der Kautschuk-Granulate in Schritt a) von 5 bis 20 % variiert.

5. Verfahren zur Umwandlung von Kautschuk-Granulaten nach einem der Ansprüche 1 bis 4, durchgeführt in zyklischer Weise, bei dem das gesamte in der bei Schritt a) erhaltenen Gasphase vorhandene Wasser oder Teile davon gesammelt werden und bei dem das gewonnene Wasser in Schritt a) wieder verwendet wird.

## Claims

1. A process for converting rubber granulates into a carbonized substance comprising the following steps:
a) pyrolyzing the rubber granulates at a temperature between 400 and 500° C while introducing liquid water during the pyrolysis, whereby carbonized substance and a gaseous phase are obtained,
b) recovering the carbonized substance obtained during step a).

2. The process according to claim 1, where step a) is carried out at atmospheric pressure.

3. The process according to claim 1 or 2, also comprising the following steps:
c) separating, by distillation, the compounds of the gaseous phase obtained during step a) that have a boiling temperature above 300° C, whereby a liquid composition, called heavy oil, is obtained,
d) recovering the heavy oil obtained in step c).

4. The process according to any one of claims 1 to 3, wherein the weight percentage of water relative to the weight of rubber granulates in step a) varies from 5% to 20%.

5. The rubber granulate conversion process according to any one of claims 1 to 4, conducted according to a cyclic mode in which all or part of the water present in the gaseous phase obtained in step a) is recovered and where the recovered water is reused in step a).
